# EUROPEAN PATENT SPECIFICATION

(11) **EP 0 891 511 B1**
(45) Date of publication and mention of the grant of the patent: **02.07.2003**
(21) Application number: 97917311.9
(22) Date of filing: 14.04.1997
(51) Int. Cl.: F16L 59/16

(54) **FASTENING ARRANGEMENT AND A METHOD FOR SECURING TUBES ARRANGED WITHIN EACH OTHER**
BEFESTIGUNGSANORDNUNG UND VERFAHREN ZUM VERBINDEN INEINANDER ANGEORDNETER ROHRE
DISPOSITIF DE FIXATION ET PROCEDE DE FIXATION DE TUBES ENGAGES LES UNS DANS LES AUTRES

(30) Priority: 12.04.1996 FI 961625
(43) Date of publication of application: 20.01.1999
(73) Proprietor: Jyväskylän Ivk-Tuote OY, 40250 Jyväskylä (FI)
(72) Inventor: HAUTALA, Reijo, FIN-62310 Voltti (FI)
(74) Representative: Hjelt, Dag Silvio Hjalmar Andrea
(86) International application number: FI9700228
(87) International publication number: WO97039274

(56) References cited:
- WO-A-93/16321
- CH-A- 671 084
- DE-A- 2 530 549
- DE-A- 2 758 516
- FI-B- 92 246
- US-A- 4 019 761

## Description

The invention relates to a tube arrangement including subsequent interconnecting tube portions, said portions comprising nested tubes arranged within each other, and a layer of insulating material arranged in an insulating space between said tubes, said arrangement further comprising fastening means including conical joints arranged at the respective ends of said tubes, each of said conical joints comprising a conical portion made of a resilient but rather stiff insulating material for receiving a locking band. The invention also relates to a method for securing the stability of nested tubes in a tube system, said system comprising sequentially interconnectable modular pieces, each of which comprise an inner tube, an outer tube, as well as, at the ends of said tubes, at least partially conical end pieces comprising an insulating seal.

Such fastening arrangements are known from joint arrangements for so-called modular tubes, as an example of which Finnish Patent No. 92098 may be mentioned. Said patent discloses nested tubes between which an insulation is arranged, a generally conical flange ring coacting with a separate tightening band. For simple modular tubes an arrangement according to Finnish Patent No. 92246 may be used. In both cases generally conical end pieces i.e. flange rings are pressed against each other and locked using a separate locking band having the general shape of a double cone. In both cases a conical ring portion is made of metal or the like material and arranged at the outer surface of the tube entity. Thus, said conical ring will be located at the outside of any insulation in said double tube arrangement comprising an inner and an outer tube.

Document CH 671 084 A5 shows also a prior art arrangement.

The present invention relates to an improved fastening arrangement and especially to such a one where an insulating material as such is used as the material for said conical flange ring, to which a sealing and suitably resilient portion at least partially will connect. Favorably, for the conical insulating portion such an insulating material will be used, which as such is sealing and relatively stiff but still resilient, for example silicone, neoprene rubber, special plastics or the like material, which withstands the heat applied in the tube and which does not form, upon heating, toxic or otherwise harmful gases. For double tubes a conical ring made of such materials replaces the insulation between the inner and outer tubes and favorably simultaneously acts as a seal between said tube portions. A certain resilience simultaneously facilitates the control of small angular variations and a secure locking and sealing. However, said resilience also provides a drawback related to the materials or combinations of materials used since it causes a situation where the dimensional stability as such might not be sufficient. A secure attachment of the inner and outer tubes to the conical portion may also constitute a problem, due to the slightly diffuse shape of said portion.

According to the present invention this problem is solved in accordance with the appended claims. Thus, the invention is characterized in that the conical portion which is adapted for receiving the locking band itself constitutes a part of a separate insulating and preferably rather stiff material portion which extends beyond said outer tube and constitutes an insulation between said tubes, suitably between said inner and said outer tubes or corresponding portions thereof, said conical portion comprising distinct supporting means for the insulating material of said conical portion and favorably a separate formation arranged for receiving said outer tube. The inventive method is characterized in the steps of arranging at least one distinct supporting ring at an inner side of the generally stiff insulating portion of said end pieces and in at least one attaching means to extend at least to some extent and seen in a direction from said outer tube towards said insulating portion, form said outer tube into said insulating portion in a transversal plane which is located behind the plane defined by the extension of said supporting ring for said insulating portion.

The invention will now be described in more detail with reference to the appended exemplifying drawings, wherein a favorable embodiment of the invention is disclosed. In the drawings
- Figures 1, 2 and 3: generally disclose partial sections of arrangements according to some of the simplest embodiments of the invention in such a manner that said Figures disclose two joined ends of modular tubes, respectively,
- Figure 4: partially in section discloses an especially preferred embodiment of the invention, and
- Figure 5: in section discloses the arrangement according to Figure 4 adapted to a separate series of extension pieces for the interconnecting of tubes.

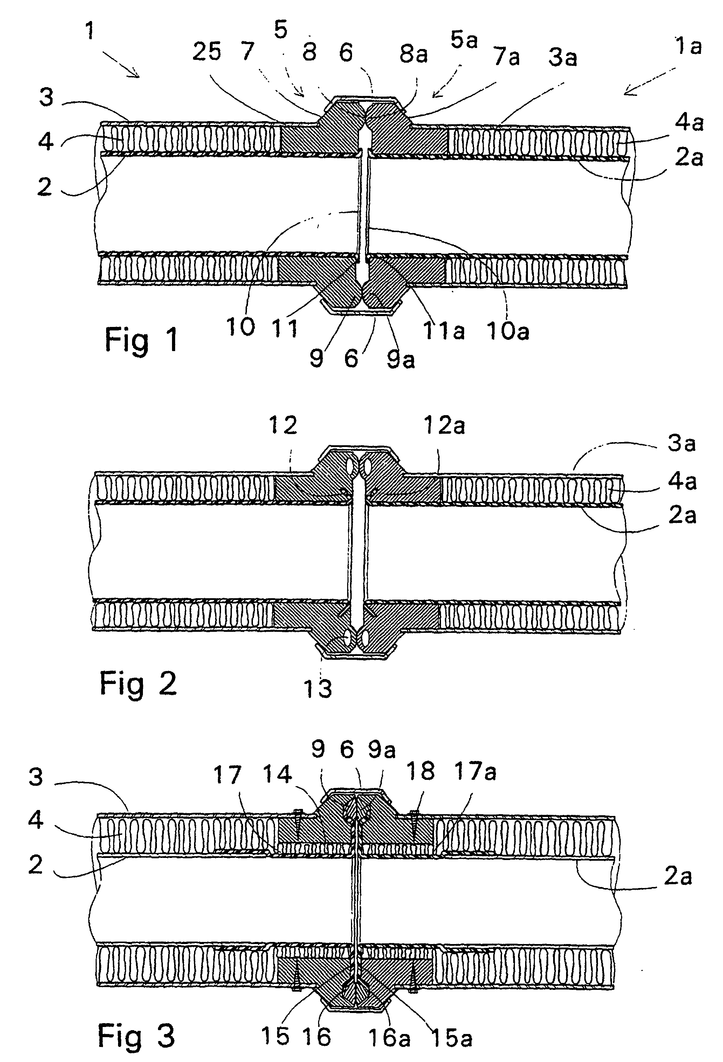

According to Figure 1, a modular tube 1, 1a in a tube system generally comprises an inner tube 2, 2a, an outer tube 3, 3a arranged coaxially with respect to said inner tube, as well as generally an insulation layer 4, 4a arranged in an insulating space between said tubes. As a rule, said tube system must be constituted in such a manner that sequential inner tubes 2, 2a extend essentially unbroken. Media, which are hot or cold with respect to the ambient temperature, may flow in said tubes, and the purpose of said insulation 4, 4a is to prevent heat from passing from said inner tube outwards or vice versa. Thus, it will be appreciated that also said insulation 4, 4a would extend unbroken with respect to its properties. On the other hand, the functional idea in modular tubing is that a rather extensive tube system can be relatively easily assembled from parts having standard dimensions, where the range of parts besides the straight tubes disclosed herein may comprise curved portions and different adaptor and branch elements. Of course, what herein is expressed in context with modular tubes can also be applied in context with such further parts.

Figure 1 discloses conically shaped interacting joint pieces, i.e. conical portions 5 and 5a. At the connecting said conical portions 5, 5a will be located end-to-end and pressed against each other by a locking ring or band 6 having the general shape of a double cone, in such a manner that conical surfaces of said band will press against conical surfaces 7, 7a at said joint pieces, thus forcing said tubes 1, 1a together and keeping them there.

In the Figures the joint structure of said tubes 1, 1a is disclosed in a slightly caricatured manner in order to more clearly show interacting sealing surfaces 8, 8a of said conical portions 5, 5a, which surfaces will be located against each other. According to the invention each conical portion 5, 5a is made of a favorably slightly resilient and compressible but at the same time insulating material, where especially sealing portions 9, 9a in practice will be compressed to such an extent that the ends 10, 10a of said tubes 2, 2a usually will be located practically against each other.

According to the invention each conical portion 5, 5a will extend, contrary to prior art, essentially unbroken from the general annular plane of said outer tubes 3, 3a into the insulating space between said tubes 3, 3a and 2, 2a, where said conical portion 5, 5a in the embodiment disclosed in the drawings in practice will completely substitute said insulation 4,4a in the joint region. In Figure 3 there is disclosed an arrangement where a proper insulation 4, 4a is further arranged in the space between said conical portion 5, 5a and the inner tube.

As material for said conical portion 5, 5a suitably silicone, neoprene or the like insulating material is used, which material simultaneously will slightly flex and thus as such act as an effective seal. Since said materials generally as one property show a certain resilience or in some cases alternatively a certain brittleness said materials are simultaneously to some extent exposed also to other deformations. Thus, the inventive solution also comprises the feature of supporting said conical portion's insulating material using a separate support. In the arrangement according to Figure 1 a relatively hard sealing insulating material is used, especially a suitable special plastics, and then a short flange-like portion 11, 11a will be sufficient, which in the disclosed embodiment is formed directly by shaping the end of said inner tube 2, 2a.

Here it should be observed that the actual sealing force will originate explicitly due to the interaction between the conical inner surface of said locking band 6 and the conical surfaces 7, 7a of said conical portions 5, 5a made of insulating material, where said inner and outer tubes 2, 2a, 3, 3a mainly will only follow. Since the continuity of the inner tube 2, 2a usually is considered to be important, the end of said inner tube is appropriately formed in such a way that the clamping force via said insulating material will act also directly at said inner tube 2, 2a. For said outer tube 3, 3a the actual clamping force usually is of less significance but instead it is important that said outer tube 3, 3a and therewith said insulation 4 will remain essentially in place. For this reason said conical portion 5, 5a made of insulating material is appropriately equipped with a separate counter formation 25 at said outer tube 3, 3a, which formation to its shape will attach to the end of said outer tube.

Figure 2 discloses an arrangement corresponding to the one disclosed in Figure 1. Here each supporting portion is formed by a backwards directed portion 12, 12a which may be an unbroken flange or may be constituted by separate wings which are located mutually spaced apart. Figure 2 also discloses a sealing surface arrangement where a sealing edge extends beyond the end of each modular tube 1, 1a at least prior to the connecting, said sealing edge further comprising, in the embodiment disclosed in Figure 2, a hollow portion 13. As such it will be evident that the sealing edge 8, 8a also may comprise other formations like different kinds of lip structures or the like.

In structures according to Figures 1 and 2 said conical portion 5, 5a can be assembled e.g. by bending said sealing insulating material ring over said flange-like supports 11, 11a, and 12, 12a. The outer surface of said conical portion 5, 5a is shaped as a formation 25 supporting said outer tube 3, 3a, and since a resilient accommodating portion of insulating material i.e said conical portion 5, 5a extends over the whole insulating space, both tubes will be kept in position within the resilience of said conical portion 5, 5a.

In the structure according to Figure 3 the inner diameter of said conical portion 5, 5a is clearly larger than the outer diameter of said inner tube 2, 2a. Thus, a separate insulating layer 14, 14a can be arranged between said conical portion 5, 5a and said inner tube 2, 2a. In the embodiment shown, the conical portion 5, 5a itself is made of a relatively hard essentially unbendable insulating material, to which a separate sealing portion 9, 9a is attached, which e.g. by gluing is attached to the actual insulating conical portion 5, 5a.

In order to secure a sufficient supporting for said conical portion under all conditions, said support is in this embodiment made as a flange 15, 15a, the outermost portion 16, 16a of which favorably supports, suitably from behind or at the center, the portion of insulating material 9, 9a attached to said conical portion 5, 5a. Obviously it will be difficult to arrange such a conical portion in place between already shaped inner and outer tubes and further so that an extra insulation 14, 14a will be located in a desired manner. For this reason said structure comprises a separate sleeve-like inner tube portion 17, 17a at which said conical portion 5, 5a and any possible extra insulation 14, 14a is arranged favorably prior to the connecting procedure. In order to keep the assembly together said outer tube 3, 3a and said conical portion are favorably interlocked, in this case, by a separate fastener 18, suitably by a self-boring special screw, rivet or the like. In another embodiment said attachment is arranged between said inner tube 2, 2a and said sleeve-like inner tube portion 17, 17a, respectively.

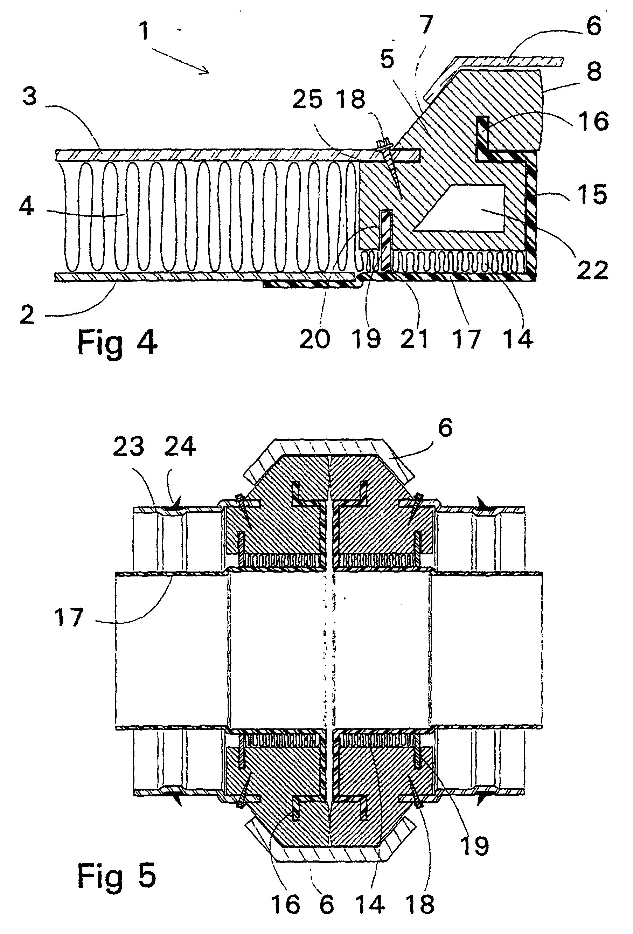

Figure 4 discloses an especially favorable embodiment which is developed from the general arrangement disclosed in Figure 3. In this embodiment the alignment and stability between said outer tube 3, said inner tube 2 and said conical portion 5 is secured by a separate supporting ring 19 which is located at the end of said conical portion, i.e. said ring made of a sealing and insulating material, in an annular groove 20 arranged at the inner rim of said ring. An inner edge 21 of said supporting ring, on the other hand, is supported against said inner tube 2 and especially against said sleeve-like inner tube portion 17. By locating a fixing means 18, e.g. a fastening screw, in such a way that it will be located, seen in the direction of the outer tube 3, behind said supporting ring 19 or its imagined extension, i.e. within the supporting ring's range of influence, said fixing means 18 will in practice take support from said supporting ring even when the conical portion's 5 resilient portion of sealing and insulating material is located between said fixing means 18 and said supporting ring. Figure 4 further discloses that insulating material in certain cases can be saved by the use of hollow portions or filler pieces 22.

Figure 5 discloses a separate interconnecting piece which is realized in accordance with the arrangement according to Figure 4, said piece comprising, respectively, a sleeve-like portion 17 to be located in said inner tube 2 and, correspondingly, a separate sleeve-like portion 23 to be located in said outer tube, said sleeve-like portion comprising a lip seal 24. Such elements may especially well be used as joint and adapting elements as mentioned above.

## Claims

1. A tube arrangement including sequentially interconnecting tube portions (1, 1a) comprising nested tubes (2, 2a, 3, 3a) and a layer of insulating material (4, 4a) arranged in an insulating space between said tubes (2, 2a, 3, 3a, respectively), said arrangement further comprising fastening means including conical joints (5, 5a, 6) located at the respective ends of said tubes, each individual conical joint comprising a conical portion (5, 5a) adapted for receiving a locking band (6), **characterized in that** said conical portion (5, 5a) itself constitutes a part of a separate insulating material portion extending beyond the outer ones (3, 3a) of said tubes (2, 2a, 3, 3a) and constituting an insulation between said tubes (2, 2a, 3, 3a), the arrangement further comprising distinct supporting means (11, 11a, 12, 12a, 15, 15a, 16, 16a, 19) for the portion of insulating material which includes said conical portion (5, 5a).

2. An arrangement as defined in claim 1, **characterized in that** said supporting means (11, 11a, 12, 12a, 15, 15a, 16, 16a, 19) are made of a material which differs from the insulating material of said conical portion (5, 5a) and is stiffer than said insulating material, said material suitably being metal.

3. An arrangement as defined in claim 1 or 2, **characterized in that** said support (15, 16) extends from the level of an inner tube (2) outwards at least to the level of said outer tube (3), suitably approximately to the center of said conical portion (5, 5a).

4. An arrangement as defined in any one of claims 1 to 3, **characterized in that** at least one supporting means (11, 11a, 12, 12a, 15, 15a, 16, 16a, 19) is functionally associated with an inner tube (2, 17) suitably so that a supporting means (19) extends essentially to said inner tube (2, 17, 17a) and/or so that said supporting means (11, 11a, 12, 12a, 15, 15a, 16, 16a, 19) constitutes a part of said inner tube (2, 17, 17a), suitably a flange (11, 11a, 15, 15a), a fold (12, 12a) or the like portion thereof.

5. An arrangement as defined in any one of claims 1 to 4, **characterized in that** a separate formation (25) is arranged for the reception of said outer tube (3, 3a) and that a separate fastener (18) is arranged for attaching said outer tube (3, 3a) to said conical portion (5, 5a) within the range of influence of said supporting means (19) for said insulating material.

6. An arrangement as defined in any one of claims 1 to 5, **characterized in that** at least one supporting means comprises a separate supporting ring (19) which suitably is arranged in a groove (20) in said insulating material.

7. An arrangement as defined in any one of claims 1 to 6, **characterized in that** said insulating conical portion (5, 5a) as such is of a relatively hard material, to which a separate sealing portion (9, 9a) of a more resilient material is associated, said sealing portion preferably being supported by a supporting means (16, 16a).

8. A method for securing the stability of nested tubes (2, 2a, 3, 3a) in a tube system comprising sequentially connectable modular pieces (1, 1a) which, respectively, comprise an inner tube (2, 2a), an outer tube (3, 3a) as well as at least partially conical end pieces located at the ends of said tubes and comprising, as such, an insulating portion, **characterized in** the following steps:
- arranging, at the inner side of a generally stiff insulating portion (5, 5a) of said end pieces, at least one distinct supporting ring (19) for supporting said insulating portion (5, 5a), and
- arranging at least one attaching means (18) to extend, at least to some extent and seen in a direction from said outer tube (3, 3a) towards said insulating portion, from said outer tube (3, 3a) into said insulating portion (5, 5a) in a transversal plane which is located behind a plane constituted by an extension of said supporting ring (19).

9. A method as defined in claim 8, **characterized in** using said supporting ring (19) for aligning said insulating portion (5, 5a) of said end piece with respect to said inner tube (2, 2a) and/or for keeping a separate insulation (14) in a space between said insulating portion (5, 5a) of said end piece and said inner tube (2, 2a).

10. A method as defined in claim 8 or 9, **characterized in** using a screw, rivet or the like essentially oblong piece as said attaching means (18), said piece being brought to penetrate the wall of said outer tube (3, 3a) and to sink into said stiff insulating material (5, 5a).

## Patentansprüche

1. Rohranordnung, umfassend aufeinander folgend miteinander in Verbindung stehende Rohrabschnitte (1, 1a), welche ineinander geschobene Rohre (2, 2a, 3, 3a) und eine Schicht von Isoliermaterial (4, 4a), die in einem Isolierraum zwischen den Rohren (2, 2a, 3, 3a) angeordnet ist, umfassen, wobei die Anordnung des Weiteren Befestigungsmittel umfasst, welche konische Verbindungen (5, 5a, 6) umfassen, die an den jeweiligen Enden der Rohre angeordnet sind, wobei jede einzelne konische Verbindung einen konischen Abschnitt (5, 5a) umfasst, welcher zum Aufnehmen eines Klemmbands (6) geeignet ist, **dadurch gekennzeichnet, dass** der konische Abschnitt (5, 5a) selbst einen Teil eines getrennten Isoliermaterialabschnitts darstellt, welcher sich über die äußeren (3, 3a) der Rohre (2, 2a, 3, 3a) hinaus erstreckt und eine Isolierung zwischen den Rohren (2, 2a, 3, 3a) darstellt, wobei die Anordnung des Weiteren einzelne Tragmittel (11, 11a, 12, 12a, 15, 15a, 16, 16a, 19) für den Abschnitt von Isoliermaterial umfasst, welcher den konischen Abschnitt (5, 5a) umfasst.

2. Anordnung nach Anspruch 1, **dadurch gekennzeichnet, dass** die Tragmittel (11, 11a, 12, 12a, 15, 15a, 16, 16a, 19) aus einem Material hergestellt sind, welches sich vom Isoliermaterial des konischen Abschnitts (5, 5a) unterscheidet und steifer als das Isoliermaterial ist, wobei das Material geeigneterweise Metall ist.

3. Anordnung nach Anspruch 1 oder 2, **dadurch gekennzeichnet, dass** der Träger (15, 16) sich vom Niveau eines inneren Rohrs (2) wenigstens bis zum Niveau des äußeren Rohrs (3), geeigneterweise ungefähr bis zur Mitte des konischen Abschnitts (5, 5a), nach außen erstreckt.

4. Anordnung nach einem der Ansprüche 1 bis 3, **dadurch gekennzeichnet, dass** wenigstens ein Tragmittel (11, 11a, 12, 12a, 15, 15a, 16, 16a, 19) mit einem inneren Rohr (2, 17) funktionell verbunden ist, und zwar geeigneterweise so, dass sich ein Tragmittel (19) im Wesentlichen zu dem inneren Rohr (2, 17, 17a) erstreckt, und/oder so, dass das Tragmittel (11, 11a, 12, 12a, 15, 15a, 16, 16a, 19) einen Teil des inneren Rohrs (2, 17, 17a), geeigneterweise einen Flansch (11, 11a, 15, 15a), einen Falz (12, 12a) oder ähnlichen Abschnitt davon darstellt.

5. Anordnung nach einem der Ansprüche 1 bis 4, **dadurch gekennzeichnet, dass** eine getrennte Ausbildung (25) für die Aufnahme des äußeren Rohrs (3, 3a) angeordnet ist und dass eine getrennte Befestigungsvorrichtung (18) zum Befestigen des äußeren Rohrs (3, 3a) am konischen Abschnitt (5, 5a) innerhalb des Einflussbereichs des Tragmittels (19) für das Isoliermaterial angeordnet ist.

6. Anordnung nach einem der Ansprüche 1 bis 5, **dadurch gekennzeichnet, dass** wenigstens ein Tragmittel einen getrennten Tragring (19) umfasst, welcher geeigneterweise in einer Nut (20) im Isoliermaterial angeordnet ist.

7. Anordnung nach einem der Ansprüche 1 bis 6, **dadurch gekennzeichnet, dass** der konische Isolierabschnitt (5, 5a) als solcher aus einem verhältnismäßig harten Material ist, mit welchem ein getrennter Dichtungsabschnitt (9, 9a) eines elastischeren Materials verbunden ist, wobei der Dichtungsabschnitt vorzugsweise durch ein Tragmittel (16, 16a) getragen wird.

8. Verfahren zum Sichern der Stabilität von ineinander geschobenen Rohren (2, 2a, 3, 3a) in einem Rohrsystem, welches aufeinander folgend verbindbare Modulstücke (1, 1a) umfasst, die jeweils umfassen: ein inneres Rohr (2, 2a), ein äußeres Rohr (3, 3a), sowie wenigstens teilweise konische Endstücke, welche an den Enden der Rohre angeordnet sind und als solche einen Isolierabschnitt umfassen, **gekennzeichnet durch** die folgenden Schritte:
Anordnen an der Innenseite eines im Allgemeinen steifen Isolierabschnitts (5, 5a) der Endstücke wenigstens eines einzelnen Tragrings (19) zum Tragen des Isolierabschnitts (5, 5a), und
Anordnen wenigstens eines Befestigungsmittels (18), um sich, wenigstens bis zu einem gewissen Ausmaß und gesehen in einer Richtung vom äußeren Rohr (3, 3a) zum Isolierabschnitt, in einer transversalen Ebene, die sich hinter einer Ebene befindet, welche **durch** eine Ausdehnung des Tragrings (19) gebildet wird, vom äußeren Rohr (3, 3a) in den Isolierabschnitt (5, 5a) zu erstrecken.

9. Verfahren nach Anspruch 8, **gekennzeichnet durch** Verwenden des Tragrings (19) zum Ausrichten des Isolierabschnitts (5, 5a) des Endstücks in Bezug auf das innere Rohr (2, 2a) und/oder zum Halten einer getrennten Isolierung (14) in einem Raum zwischen dem Isolierabschnitt (5, 5a) des Endstücks und dem inneren Rohr (2, 2a).

10. Verfahren nach Anspruch 8 oder 9, **gekennzeichnet durch** Verwenden eines Schraubens, Niets oder ähnlichen im Wesentlichen länglichen Stücks als das Befestigungsmittel (18), wobei das Stück zum Eindringen in die Wand des äußeren Rohrs (3, 3a) und Einsinken in das steife Isoliermaterial (5, 5a) gebracht wird.

## Revendications

1. Agencement de tubes, comprenant des portions de tube séquentiellement interconnectées (1, 1a) comprenant des tubes emboîtés (2, 2a, 3, 3a) et une couche de matériau isolant (4, 4a) disposée dans un espace d'isolation entre lesdits tubes (2, 2a, 3, 3a, respectivement), ledit agencement comprenant en outre des moyens de fixation incluant des joints coniques (5, 5a, 6) situés aux extrémités respectives desdits tubes, chaque joint conique individuel comprenant une portion conique (5, 5a) apte à recevoir une bande de verrouillage (6), **caractérisé en ce que** ladite portion conique (5, 5a) constitue elle-même une partie d'une portion de matériau isolant séparée s'étendant au-delà des tubes extérieurs (3, 3a) desdits tubes (2, 2a, 3, 3a) et constituant une isolation entre lesdits tubes (2, 2a, 3, 3a), l'agencement comprenant en outre des moyens de support distincts (11, 11a, 12, 12a, 15, 15a, 16, 16a, 19) pour la portion de matériau isolant qui inclut ladite portion conique (5, 5a).

2. Agencement selon la revendication 1, **caractérisé en ce que** lesdits moyens de support (11, 11a, 12, 12a, 15, 15a, 16, 16a, 19) sont réalisés en un matériau qui diffère du matériau isolant de ladite portion conique (5, 5a) et qui est plus rigide que ledit matériau isolant, ledit matériau étant d'une manière appropriée du métal.

3. Agencement selon la revendication 1 ou 2, **caractérisé en ce que** ledit support (15, 16) s'étend à partir du niveau d'un tube interne (2) vers l'extérieur au moins jusqu'au niveau dudit tube extérieur (3), d'une manière appropriée approximativement au centre de ladite portion conique (5, 5a).

4. Agencement selon l'une des revendications 1 à 3, **caractérisé en ce qu'**au moins l'un des moyens de support (11, 11a, 12, 12a, 15, 15a, 16, 16a, 19) est fonctionnellement associé à un tube interne (2, 17) d'une manière appropriée de façon qu'un moyen de support (19) s'étend essentiellement audit tube interne (2, 17, 17a) et/ou de façon que ledit moyen de support (11, 11a, 12, 12a, 15, 15a, 16, 16a, 19) constitue une partie dudit tube interne (2, 17, 17a), d'une manière appropriée une bride (11, 11a, 15, 15a), un pli (12, 12a) ou une portion similaire de celui-ci.

5. Agencement selon l'une des revendications 1 à 4, **caractérisé en ce qu'**une formation séparée (25) est agencée pour la réception dudit tube externe (3, 3a), et **en ce qu'**un organe de fixation séparé (18) est agencé pour fixer ledit tube externe (3, 3a) à ladite portion conique (5, 5a) dans la plage d'influence dudit moyen de support (19) pour ledit matériau isolant.

6. Agencement selon l'une des revendications 1 à 5, **caractérisé en ce qu'**au moins un moyen de support comprend une bague de support séparée (19) qui est agencée d'une manière appropriée dans une rainure (20) dans ledit matériau isolant.

7. Agencement selon l'une des revendications 1 à 6, **caractérisé en ce que** ladite portion conique isolante (5, 5a) en tant que telle est en un matériau relativement dur, à laquelle une portion d'étanchéité séparée (9, 9a) en un matériau plus élastique est associée, ladite portion d'étanchéité étant supportée de préférence par un moyen de support (16, 16a).

8. Procédé pour assurer la stabilité de tubes emboîtés (2, 2a, 3, 3a) dans un système de tubes comprenant des pièces modulaires (1, 1a) pouvant être connectées séquentiellement qui comprennent respectivement un tube interne (2, 2a), un tube externe (3, 3a) ainsi que des pièces d'extrémité au moins partiellement coniques situées aux extrémités desdits tubes et comprenant, en tant que telles, une portion isolante, **caractérisé par** les étapes consistant à :
- agencer, au côté interne d'une portion isolante généralement rigide (5, 5a) desdites pièces d'extrémité, au moins une bague de support distincte (19) pour supporter ladite portion isolante (5, 5a), et
- agencer au moins un moyen de fixation (18) pour s'étendre, au moins jusqu'à un certain degré et en regardant dans une direction depuis ledit tube externe (3, 3a) vers ladite portion isolante, dudit tube externe (3, 3a) dans ladite portion isolante (5, 5a) dans un plan transversal qui se situe derrière un plan constitué par une extension de ladite bague de support (19).

9. Procédé selon la revendication 8, **caractérisé par** l'utilisation de ladite bague de support (19) pour aligner ladite portion isolante (5, 5a) de ladite pièce d'extrémité par rapport audit tube interne (2, 2a) et/ou pour maintenir une isolation séparée (14) dans un espace entre ladite portion isolante (5, 5a) de ladite pièce d'extrémité et ledit tube interne (2, 2a).

10. Procédé selon la revendication 8 ou 9, **caractérisé par** l'utilisation d'une vis, d'un rivet ou d'une pièce similaire essentiellement oblongue comme moyen de fixation (18), ladite pièce étant amenée à passer à travers la paroi dudit tube externe (3, 3a) et à s'enfoncer dans ledit matériau isolant rigide (5, 5a).
